# EUROPEAN PATENT SPECIFICATION

(11) **EP 3 421 543 B1**
(45) Date of publication and mention of the grant of the patent: **13.05.2020**
(21) Application number: 17756289.9
(22) Date of filing: 13.02.2017
(51) Int. Cl.: C08J 5/18, C08L 65/00, C08L 81/06

(54) **FILM**
FILM
FILM

(30) Priority: 22.02.2016 JP 2016031330
(43) Date of publication of application: 02.01.2019
(73) Proprietor: Mitsubishi Chemical Corporation, Tokyo 100-8251 (JP)
(72) Inventor: TANAKA, Kazuya, Nagahama-shi Shiga 526-8660 (JP)
(74) Representative: TBK
(86) International application number: PCT/JP2017/005197
(87) International publication number: WO 2017/145848

(56) References cited:
- JP-A- H0 820 716
- JP-A- 2009 280 814
- JP-A- 2010 525 126
- JP-A- 2015 193 813
- JP-A- 2015 521 534
- JP-A- 2015 533 872

## Description

### TECHNICAL FIELD

The present invention relates to a film of super engineering plastics that is capable of being applied to an insulating film for electric and electronic devices, automobiles, aircrafts, and the like, a printed circuit board, a spacer, a chassis, a surface materials, and the like.

### BACKGROUND ART

In recent years, as a film for applications including electric and electronic devices, automobiles, aircrafts, and the like, super engineering plastics represented by polyether imide (PEI), polyether sulfone (PES), polyether ether ketone (PEEK), polyether ketone ketone (PEKK), and the like are being widely used due to the excellent in heat resistance, mechanical characteristics, chemical resistance, and durability thereof.

For example, PTL 1 describes as a molding material capable of providing a molded article excellent in mechanical characteristics, a molding material containing reinforcing fibers having impregnated therein a thermoplastic resin, such as polyester, polyamide, polycarbonate, PEEK, PEKK, PEI, polysulfone, polyarylate, and polyphenylene ether, and a resin containing cyclic polyarylene sulfide.

### CITATION LIST

### PATENT LITERATURE

PTL 1: JP 2015-193812 A

### SUMMARY OF INVENTION

### TECHNICAL PROBLEM

The resin to be impregnated in reinforcing fibers described in PTL 1 is excellent in impregnation property in the reinforcing fibers, but cannot provide sufficient heat resistance and impact resistance required for a resin used in fiber-reinforced plastics with the use of the combination of the thermoplastic resins, and it cannot be said that the rigidity as a composite material with reinforcing fibers is sufficient.

Among the super engineering plastics, in particular, PEKK is excellent in chemical resistance and adhesiveness to reinforcing fibers, and can exhibit excellent mechanical characteristics, such as rigidity, as a composite material with reinforcing fibers. Accordingly, PEKK is attracting attention as a matrix material for fiber-reinforced plastics in recent years, but the heat resistance and the impact resistance thereof are still not sufficient, and further enhancement of the characteristics is demanded. Furthermore, a high tensile elastic modulus and the like are demanded as characteristics in molding into a film.

The present invention has been made under the circumstances, and an object thereof is to provide a film that has excellent heat resistance, impact resistance, and molding processability, while having a high tensile elastic modulus.

### SOLUTION TO PROBLEM

Based on the finding that a PEKK resin and a polybiphenyl ether sulfone (which may be hereinafter abbreviated as PBPES) resin have compatibility, the film of the present invention contains these resins mixed at a prescribed ratio, and thereby can enhance the heat resistance and the impact resistance, which are not necessarily sufficient only with the PEKK resin, while retaining the high tensile elastic modulus of the PEKK resin itself.

The present invention provides the following items [1] to [5].
[1] A film containing: a polyether ketone ketone resin (A) having a repeating unit represented by structural formula (1) and a repeating unit represented by structural formula (2); and a polybiphenyl ether sulfone resin (B) having a repeating unit (b) represented by general formula (3), a content ratio of the polybiphenyl ether sulfone resin (B) occupied in the total of the polyether ketone ketone resin (A) and the polybiphenyl ether sulfone resin (B) being from 10 to 70% by mass: 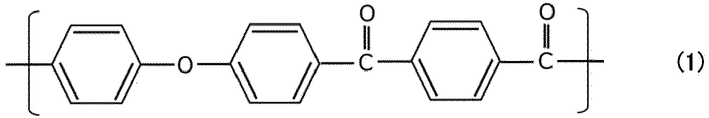 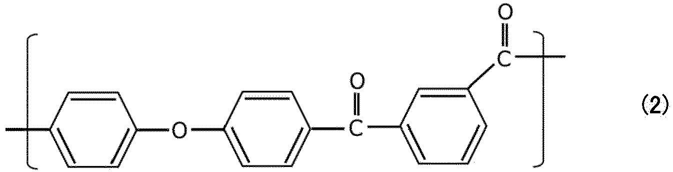 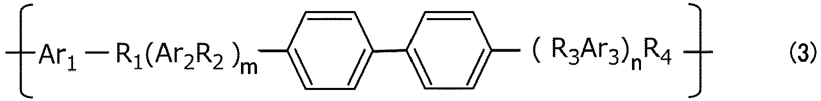 wherein in the formula (3), at least any one of R₁ to R₄ represents a sulfonyl group, and at least any one thereof represents an oxygen atom, with the balance each independently representing any of an oxygen atom, a sulfur atom, a sulfonyl group, and a carbonyl group; Ar₁ to Ar₃ each independently represent an arylene group having from 6 to 24 carbon atoms; m represents 0 or 1; and n represents 0 or 1.
[2] The film according to the item [1], which has a glass transition temperature measured according to JIS K7121:2012 of 160°C or more.
[3] The film according to the item [1] or [2], which has a softening temperature measured according to JIS K7196:2012 of from 160 to 250°C.
[4] The film according to any one of the items [1] to [3], which has a tensile elastic modulus measured according to JIS K7127:1999 of 2,500 MPa or more.
[5] The film according to any one of the items [1] to [4], which has a heat of crystal fusion measured according to JIS K7122:2012 of 10 J/g or less.

### ADVANTAGEOUS EFFECTS OF INVENTION

According to the present invention, a film can be provided that has excellent heat resistance, impact resistance, and molding processability, while having a high tensile elastic modulus.

The film of the present invention can be favorably applied to a composite material, and can also be favorably applied to a matrix of fiber-reinforced plastics.

### DESCRIPTION OF EMBODIMENTS

The present invention will be described in detail below.

The film of the present invention contains a PEKK resin (A) and a PBPES resin (B). The combination use of the resins can enhance the heat resistance and the impact resistance while retaining the high tensile elastic modulus of the PEKK resin itself.

### [PEKK Resin (A)]

The PEKK resin (A) is a thermoplastic resin having a high tensile elastic modulus and a heat of crystal fusion that is favorable from the standpoint of the molding processability.

The PEKK resin (A) used in the present invention has a repeating unit (a-1) represented by the following structural formula (1) and a repeating unit (a-2) represented by the following structural formula (2), i.e., has two kinds of repeating units. The repeating units (a-1) and (a-2) each has one ether group and two ketone groups.

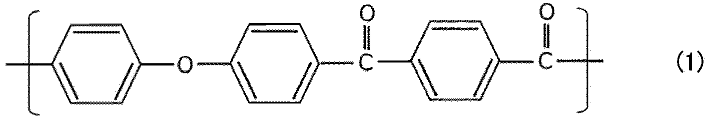

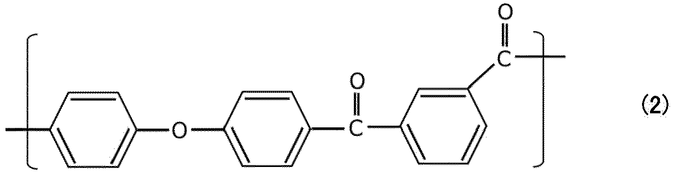

The unit ratio ((a-1)/(a-2)) of the repeating units (a-1) and (a-2) in the PEKK resin (A) is not particularly limited, and is preferably from 1.0 to 4.0, more preferably from 1.0 to 2.5, and further preferably from 1.0 to 1.5. When the unit ratio is 1.0 or more, the glass transition temperature (Tg) is not lowered, and excellent heat resistance can be retained. When the unit ratio is 4.0 or less, the crystallinity may not become excessive, and sufficient moldability may be obtained.

The PEEK resin (A) having the aforementioned structure may be used alone or as a combination of two or more kinds thereof.

The total number (polymerization degree) of the repeating units (a-1) and (a-2) is preferably from 10 to 100, and more preferably from 20 to 50, from the standpoint of the securement of the mechanical characteristics.

The PEKK resin (A) preferably has a Tg of 150°C or more, more preferably 153°C or more, and further preferably 155°C or more. When the Tg is 150°C or more, a film having sufficient heat resistance may be obtained.

The upper limit of the Tg is not particularly limited, and is preferably 200°C or less, and more preferably 190°C or less, from the standpoint of the molding processability at a low temperature.

The PEKK resin (A) preferably has a heat of crystal fusion (ΔHm) of 30 J/g or less, more preferably 20 J/g or less, and further preferably 10 J/g or less. When the ΔHm is 30 J/g or less, processing failure due to crystallization may not occur in molding process. From this standpoint, the ΔHm is preferably as small as possible, and the lower limit thereof is not limited.

The Tg and the ΔHm in the present invention are obtained according to JIS K7121:2012 and JIS K7122:2012 respectively, from a DSC (differential scanning calorimetry) curve detected on heating in a temperature range of from 25 to 400°C at a temperature rising rate of 10°C/min with a differential scanning calorimeter.

The PEKK resin (A) can be produced by a known method (see, for example, JP S61-195122 A, JP S62-129313 A, and the like).

A commercially available product may also be used therefor. Examples thereof include "Kepstan" series, produced by Arkema S.A.

### [PBPES Resin (B)]

The PBPES resin (B) is a thermoplastic resin having a repeating unit (b) represented by the following general formula (3).

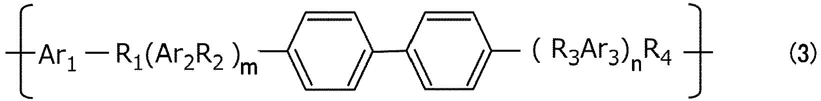

In the formula (3), at least any one of R₁ to R₄ represents a sulfonyl group, and at least any one thereof represents an oxygen atom, with the balance each independently representing any of an oxygen atom, a sulfur atom, a sulfonyl group, and a carbonyl group; Ar₁ to Ar₃ each independently represent an arylene group having from 6 to 24 carbon atoms; m represents 0 or 1; and n represents 0 or 1.

Accordingly, the repeating unit (b) has at least one aromatic nucleus bond, at least one sulfone bond, at least one ether bond, and one biphenyl bond.

R₁ to R₄ each preferably represent a sulfonyl group or an oxygen atom. R₁ preferably represents a sulfonyl group, and R₂ and R₄ each preferably represent an oxygen atom.

The numbers of carbon atoms of Ar₁ to Ar₃ each are preferably from 6 to 12. The arylene groups represented by Ar₁ to Ar₃ each may have a substituent, and preferably do not have a substituent. Examples of the substituent include an alkyl group, such as a methyl group and an ethyl group, and an alkoxy group, such as a methoxy group and an ethoxy group. Examples of the arylene group represented by Ar₁ to Ar₃ include a phenylene group and a biphenylene group, a phenylene group is preferred, and a p-phenylene group is more preferred.

m is preferably 1, and n is preferably 0.

Specifically, the repeating unit (b) of the PBPES resin (B) is preferably represented by the following structural formula (4).

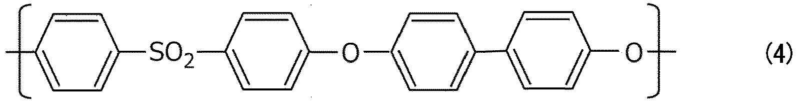

The number (polymerization degree) of the repeating unit (b) is preferably from 10 to 100, and more preferably from 20 to 50, from the standpoint of the securement of the mechanical characteristics.

The PBPES resin (B) suffices to have the repeating unit (b) in the molecular structure thereof, and may have a repeating unit other than the repeating unit (b) in such a range that does not impair the effects of the present invention. The proportion of the repeating unit (b) occupied in the molecular structure of the PBPES resin (B) is preferably more than 50% by mol and 100% by mol or less, more preferably 60% by mol or more, and further preferably 70% by mol or more, based on the total repeating units.

The PBPES resin (B) may be used alone or as a combination of two or more kinds thereof.

The PBPES resin (B) preferably has a Tg of 180°C or more, more preferably 190°C or more, and further preferably 200°C or more, from the standpoint of the achievement of practically sufficient heat resistance. The Tg is preferably 300°C or less, more preferably 280°C or less, and further preferably 260°C or less, from the standpoint of the suppression of the heating temperature for secondary processing of the film to a lower value.

The PBPES resin (B) can be produced by a known method (see, for example, U.S. Patent No. 3,634,355, U.S. Patent No. 4,008,203, U.S. Patent No. 4,108,837, and U.S. Patent No. 4,175,175.

A commercially available product may also be used therefor. Examples of the resin having the repeating unit (b) represented by the structural formula (4) include "Radel R" series, produced by Solvay Specialty Polymers Japan K.K., and "Ultrason P" series, produced by BASF SE.

The film of the present invention has a content ratio of the PBPES resin (B) occupied in the total of the PEKK resin (A) and the PBPES resin (B) of from 10 to 70% by mass, preferably from 20 to 60% by mass, and more preferably from 20 to 40% by mass. When the content ratio of the PBPES resin (B) is less than 10% by mass, sufficient heat resistance and impact resistance cannot be obtained. When the content ratio thereof exceeds 70% by mass, a sufficiently high tensile elastic modulus cannot be obtained.

### [Additional Components]

The film may contain various additives, such as a heat stabilizer, an antioxidant, an ultraviolet ray absorbent, a light stabilizer, a antibacterial and antifungal agent, an antistatic agent, a lubricant, a pigment, and a dye, in such a range that does not impair the effects of the present invention, in addition to the PEKK resin (A) and the PBPES resin (B).

### [Glass Transition Temperature (Tg)]

The film preferably has a Tg measured according to JIS K7121:2012 of 160°C or more, more preferably 170°C or more, and further preferably 180°C or more.

The Tg is an index of the heat resistance of the film, and may be specifically measured by the method described in the examples later.

When the Tg is in the temperature range, the film is difficult to deform thermally, hence it can be said that the film is excellent in heat resistance.

### [Softening Temperature (Ts)]

The film preferably has a Ts measured according to JIS K7196:2012 of from 160 to 250°C, more preferably from 165 to 240°C, and further preferably from 170 to 230°C.

The Ts is also an index of the heat resistance of the film, and may also be an index of the molding processability of the film by heating. The Ts may be specifically measured by the method described in the examples later.

When the Ts is in the temperature range, it can be said that excellent heat resistance and molding processability can be achieved simultaneously.

### [Puncture Energy]

The film preferably has a puncture energy at -20°C with a thickness of the film of 0.1 mm of 490 N.mm (50 kgf.mm) or more, more preferably 690 N.mm (70 kgf.mm) or more, and further preferably 980 N.mm (100 kgf.mm) or more.

The puncture energy is an index of the impact resistance of the film, and may be specifically measured by the method described in the examples later.

When the puncture energy is in the range, the film is difficult to break in processing and use, hence it can be said that the film is excellent in impact resistance.

### [Tensile Elastic Modulus]

The film preferably has a tensile elastic modulus measured according to JIS K7127:1999 of 2,500 MPa or more, more preferably 2,600 MPa or more, and further preferably 2,800 MPa or more. The tensile elastic modulus thereof is preferably 8,000 MPa or less.

The tensile elastic modulus may be specifically measured in the method described in the examples later.

When the tensile elastic modulus is in the range, the film used alone and the film used with other materials to form a composite can be reduced in thickness, which can contribute to space saving and resource saving. Furthermore, it can be said that the film is excellent in handleability when the film is reduced in thickness.

In the case where orientation occurs in the film depending on the production method thereof, for example, in the case of the film is produced by extrusion molding, the tensile elastic modulus in the extrusion direction from the die is preferably in the aforementioned range.

### [Heat of Crystal Fusion(ΔHm)]

The film preferably has a ΔHm measured according to JIS K7122:2012 of 10 J/g or less, more preferably 5 J/g or less, and further preferably 0 J/g.

The ΔHm is an index of the grade of crystallization, and may be specifically measured by the method described in the examples later.

When the ΔHm is in the range, molding processing failure of the film due to crystallization is difficult to occur, hence it can be said that the film is excellent in molding processability.

### [Production Method of Film]

The production method of the film of the present invention is not particularly limited, and the film may be obtained, for example, in such a manner that the constitutional materials of the film are formed into an unstretched or stretched film, and is preferably obtained as an unstretched film from the standpoint of the secondary processability.

The unstretched film is a film that is not intentionally stretched for the purpose of suppressing orientation of the sheet, and herein encompasses such a film that the stretching ratio in the stretching roll in extrusion molding or the like is less than 2 times.

The unstretched film can be produced, for example, in such a manner that the constitutional materials are melt-kneaded, then extrusion molded, and cooled.

The melt kneading may be performed with a known kneader, such as a single screw or twin screw kneader. The melting temperature may be appropriately controlled depending on the kind and the mixing ratio of the resin and the presence or absence and the kind of the additive, and is preferably 320°C or more, and more preferably 330°C or more, and is preferably 380°C or less, and more preferably 360°C or less, from the standpoint of the productivity and the like.

The molding may be performed by extrusion molding using a die, such as a T-die.

The cooling may be performed, for example, by quenching the molded article by bringing into contact with a cooling device, such as a cooled cast roll. According to the procedure, the molded article is solidified to provide an unstretched film. The cooling temperature is not limited, as far as the temperature is lower than the melting temperature, and is preferably 200°C or less, and more preferably 180°C or less, and is preferably 120°C or more, and more preferably 140°C or more.

### [Application and Use Mode]

While the film of the present invention is not limited in application, the film has excellent heat resistance, impact resistance, and molding processability while having a high tensile elastic modulus, and thus can be favorably applied to various applications requiring these characteristics. Examples thereof include an insulating film for electric and electronic devices, automobiles, aircrafts, and the like, a printed circuit board, a spacer, a chassis, and a surface materials.

The film of the present invention may be formed into a multilayer film having another layer laminated thereon in such a range that does not impair the effects of the present invention. The multilayer film may be formed, for example, by a known method, such as co-extrusion, extrusion lamination, thermal lamination, and dry lamination.

The film of the present invention may be used in a composite material, and can be used, for example, as a matrix of fiber-reinforced plastics as a composite material with reinforcing fibers. The fiber-reinforced plastics can be obtained to have excellent heat resistance, impact resistance, and rigidity.

The reinforcing fibers are not particularly limited in kind thereof, and examples thereof include glass fibers, carbon fibers, alumina fibers, aluminum fibers, magnesium fibers, titanium fibers, boron fibers, liquid crystal polymer fibers, and polyethylene fibers. Among these, carbon fibers are preferred from the standpoint of the rigidity. The form of the reinforcing fibers is not particularly limited, and can be appropriately selected depending on necessity from a plain-woven fabric, a twill-woven fabric, fiber paper, an UD material (unidirectional material), and the like.

### Examples

The present invention will be described in more detail with reference to examples below, but the present invention is not limited thereto.

### [Production of Film]

In Examples and Comparative Examples, the following materials were used as representative examples of the PEKK resin (A), the PBPES resin (B), the PEI resin, and the PEEK resin, and the films having the formulations shown in Table 1 were produced.
PEKK resin (A): "Kepstan 6002", produced by Arkema S.A., Tg: 155°C
PBPES resin (B): "Ultrason P3010N", produced by BASF SE, Tg: 220°C
PEI resin: "Ultem 1000-1000", produced by Sabic Innovative Plastics, Tg: 215°C
PEEK resin: "Vestakeep 3300G", produced by Daicel-Evonik Ltd., Tg: 150°C

### (Example 1)

The PEKK resin (A) and the PBPES resin (B) were dry-blended at a mass ratio of 80/20.

The resin mixture was kneaded with a single screw extruder having a diameter of 40 mm at 350°C, and then extrusion-molded into a film with a T-die. The resulting molded article was quenched with a cast roll at approximately 160°C, so as to produce a film having a thickness of 0.1 mm.

### (Examples 2 and 3 and Comparative Examples 1 to 5)

Films were produced in the same manner as in Example 1 except that the formulation of the resin mixture in Example 1 was changed to those shown in Table 1 below.

### [Evaluation of Film]

The films produced in Examples and Comparative Examples each were measured and evaluated for the following properties as follows. The "longitudinal direction" of the film herein means the direction, in which the molded article in a film form is extruded from the T-die, and the direction perpendicular thereto in the film plane is designated as the "transverse direction".

### <Glass Transition Temperature (Tg)>

The film was heated in a temperature range of from 25 to 400°C at a temperature rising rate of 10°C/min with a differential scanning calorimeter, Pyris 1 DSC (produced by Perkin Elmer, Inc.) according to JIS K7121:2012, and the glass transition temperature was obtained from the detected DSC curve.

### <Softening Temperature (Ts)>

The film was cut into 5 mm in longitudinal direction × 5 mm in transverse direction to provide a test piece (thickness: 0.1 mm).

The test piece was measured for a softening temperature by thermomechanical analysis (TMA) according to JIS K7196:2012.

The TMA apparatus used was "TMA120C" (produced by Hitachi High-Tech Science Corporation), and the measurement condition was an atmospheric temperature of 23°C, a relative humidity of 50%, a pressure to the indenter of 0.5 N, and a temperature rising rate of 5°C/min.

### <Puncture Energy>

The film was cut into 100 mm in longitudinal direction × 100 mm in transverse direction to provide a test piece (thickness: 0.1 mm).

With a hydroshot high-speed impact tester "Model HTM-1" (produced by Shimadzu Corporation), the test piece was fixed with clamps, and an impact was applied thereto by dropping an impact core having a diameter of 1/2 inch at a dropping speed of 3 m/sec under a temperature condition of -20°C on the center of the test piece. The puncture energy, at which the test piece was broken, was obtained.

### <Tensile Elastic Modulus>

The film was cut into 400 mm in longitudinal direction × 10 mm in transverse direction to provide a test piece (thickness: 0.1 mm).

The test piece was measured for the tensile elastic modulus in the longitudinal direction thereof according to JIS K7127:1999. The tensile tester used was "Tensile Compressive Tester Model 205" (produced by Intesco Co., Ltd.), and the measurement condition was an atmospheric temperature of 23°C and a tensile speed of 5 mm/min.

### <Heat of Crystal Fusion (ΔHm)>

The film was heated in a temperature range of from 25 to 400°C at a temperature rising rate of 10°C/min with a differential scanning calorimeter, Pyris 1 DSC (produced by Perkin Elmer, Inc.) according to JIS K7122:2012, and the heat of crystal fusion (ΔHm) was obtained from the detected DSC curve.

The measurement and evaluation results for Examples and Comparative Examples are shown in Table 1.

**Table 1**

| | | | Example | | | Comparative Example | | | | |
|---|---|---|---|---|---|---|---|---|---|---|
| | | | 1 | 2 | 3 | 1 | 2 | 3 | 4 | 5 |
| Formulation (% by mass) | | | | | | | | | | |
| | PEKK (A) | | 80 | 60 | 40 | 100 | 20 | | 60 | |
| | PBPES (B) | | 20 | 40 | 60 | | 80 | 100 | | 40 |
| | PEI | | | | | | | | 40 | |
| | PEEK | | | | | | | | | 60 |
| Tg | | (°C) | 161 | 170 | 183 | 155 | 198 | 220 | 177 | 148 |
| Ts | | (°C) | 167 | 173 | 183 | 161 | 198 | 216 | 176 | 146 |
| Puncture energy | | (kgf·mm) | 105 | 99 | 116 | 28 | 255 | 144 | 30 | 210 |
| Tensile elastic modulus | | (MPa) | 2970 | 2880 | 2610 | 3670 | 2440 | 2410 | 3030 | 2650 |
| ΔHm | | (J/g) | 1 | 0 | 0 | 4 | 0 | 0 | 0 | 25 |

The above puncture energies are in N.mm: 1030; 971; 1140; 275; 2500; 1410; 294; and 2060 N.mm, respectively.

As understood from the result shown in Table 1, it was found that the films containing the PEKK (A) and the PBPES (B) in the prescribed ratio (Examples 1 to 3) were excellent in both heat resistance and impact resistance and also excellent in molding processability.

On the other hand, the heat resistance and the impact resistance were deteriorated with only the PEKK (A) (Comparative Example 1), and the tensile elastic modulus was insufficient with only the PBPES (B) (Comparative Example 3) and with the too large content ratio of the PBPES (B) (Comparative Example 2).

The impact resistance was deteriorated with the use of the PEI instead of the PBPES (B) (Comparative Example 4). The heat resistance was deteriorated, and the molding processability was not said to be good, with the use of the PEEK instead of the PEKK (A) (Comparative Example 5).

## Claims

1. A film comprising: a polyether ketone ketone resin (A) having a repeating unit (a-1) represented by structural formula (1) and a repeating unit (a-2) represented by structural formula (2); and a polybiphenyl ether sulfone resin (B) having a repeating unit (b) represented by general formula (3), a content ratio of the polybiphenyl ether sulfone resin (B) occupied in the total of the polyether ketone ketone resin (A) and the polybiphenyl ether sulfone resin (B) being from 10 to 70% by mass: 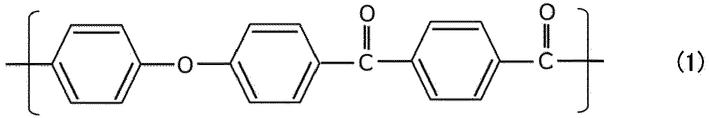 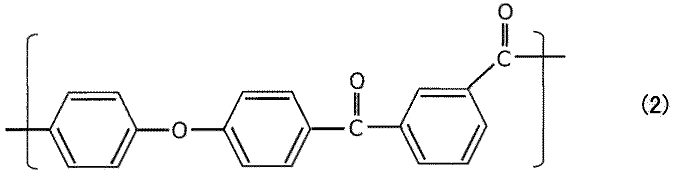 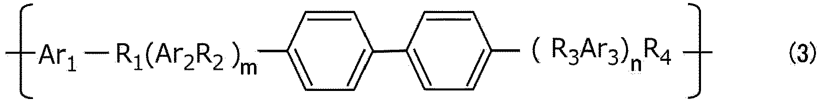 wherein in the formula (3), at least any one of R₁ to R₄ represents a sulfonyl group, and at least any one thereof represents an oxygen atom, with the balance each independently representing any of an oxygen atom, a sulfur atom, a sulfonyl group, and a carbonyl group; Ar₁ to Ar₃ each independently represent an arylene group having from 6 to 24 carbon atoms; m represents 0 or 1; and n represents 0 or 1.

2. The film according to claim 1, which has a glass transition temperature measured according to JIS K7121:2012 of 160°C or more.

3. The film according to claim 1 or 2, which has a softening temperature measured according to JIS K7196:2012 of from 160 to 250°C.

4. The film according to any one of claims 1 to 3, which has a tensile elastic modulus measured according to JIS K7127:1999 of 2,500 MPa or more.

5. The film according to any one of claims 1 to 4, which has a heat of crystal fusion measured according to JIS K7122:2012 of 10 J/g or less.

## Patentansprüche

1. Film, umfassend: ein Poly(etherketonketon)harz (A), das eine Wiederholungseinheit (a-1), dargestellt durch die Strukturformel (1), und eine Wiederholungseinheit (a-2), dargestellt durch die Strukturformel (2), aufweist; und ein Poly(biphenylethersulfon)harz (B), das eine Wiederholungseinheit (b), dargestellt durch die allgemeine Formel (3), aufweist, ein Gehaltsanteil des Poly(biphenylethersulfon)harzes (B), eingenommen in der Gesamtheit des Poly(etherketonketon)harzes (A) und des Poly(biphenylethersulfon)harzes, von 10 bis 70 Massen-% ist: 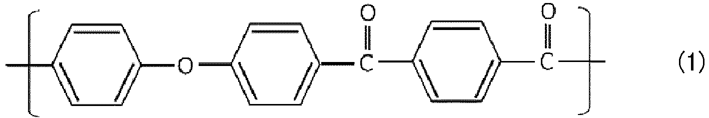 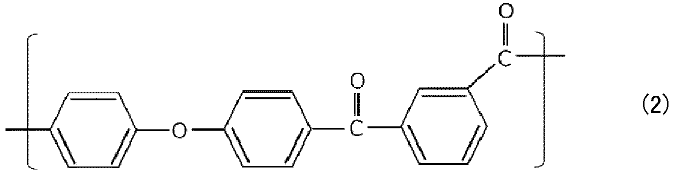 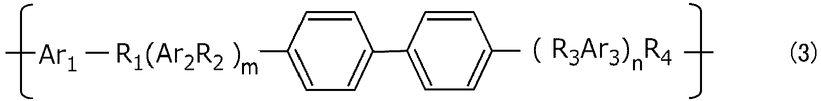 wobei in der Formel (3) wenigstens eines von R₁ bis R₄ eine Sulfonylgruppe darstellt, und wenigstens eines davon ein Sauerstoffatom darstellt, wobei der Rest jeweils unabhängig ein Sauerstoffatom, ein Schwefelatom, eine Sulfonylgruppe und eine Carbonylgruppe darstellt: Ar₁ bis Ar₃ jeweils unabhängig eine Arylengruppe mit von 6 bis 24 Kohlenstoffatomen darstellen; m 0 oder 1 darstellt; und n 0 oder 1 darstellt.

2. Film nach Anspruch 1, welcher eine Glasübergangstemperatur, gemessen nach JIS K7121:2012, von 160°C oder mehr aufweist.

3. Film nach Anspruch 1 oder 2, welcher eine Erweichungstemperatur, gemessen nach JIS K7196:2012, von 160 bis 250°C aufweist.

4. Film nach einem der Ansprüche 1 bis 3, welcher ein Zugelastizitätsmodul, gemessen nach JIS K7127:1999, von 2500 MPa oder mehr aufweist.

5. Film nach einem der Ansprüche 1 bis 4, welcher eine Kristallschmelzwärme, gemessen nach JIS K7122:2012, von 10 J/g oder weniger aufweist.

## Revendications

1. Film comprenant : une résine de polyéthercétone-cétone (A) ayant un motif répétitif (a-1) représenté par la formule structurelle (1) et un motif répétitif (a-2) représenté par la formule structurelle (2) ; et une résine de polybiphényléther-sulfone (B) ayant un motif répétitif (b) représenté par la formule générale (3), la proportion en contenu de la résine de polybiphényléther-sulfone (B) occupée dans le total de la résine de polyéthercétone-cétone (A) et de la résine de polybiphényléther-sulfone (B) étant de 10 à 70 % en masse : 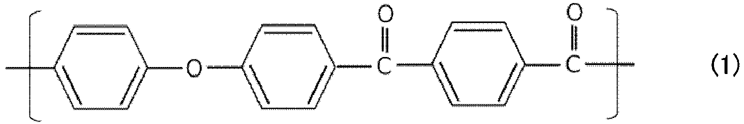 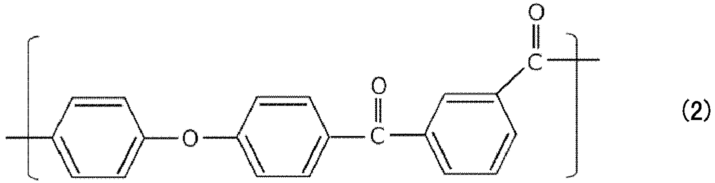 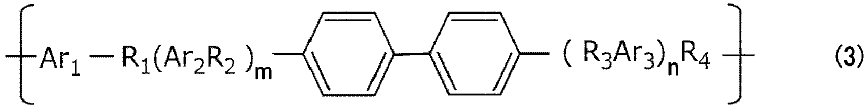 où, dans la formule (3), au moins l'un quelconque de R₁ à R₄ représente un groupe sulfonyle, et au moins l'un quelconque de ceux-ci représente un atome d'oxygène, le reste représentant chacun indépendamment l'un quelconque parmi un atome d'oxygène, un atome de soufre, un groupe sulfonyle, et un groupe carbonyle ; chacun de Ar₁ à Ar₃ représente indépendamment un groupe arylène ayant de 6 à 24 atomes de carbone ; m vaut 0 ou 1 ; et n vaut 0 ou 1.

2. Film selon la revendication 1, qui a une température de transition vitreuse, mesurée conformément à la norme JIS K7121:2012, de 160°C ou plus.

3. Film selon la revendication 1 ou 2, qui a un point de ramollissement, mesuré conformément à la norme JIS K7196:2012, de 160 à 250°C.

4. Film selon l'une quelconque des revendications 1 à 3, qui a un module élastique en traction, mesuré conformément à la norme JIS K7127:1999, de 2 500 MPa ou plus.

5. Film selon l'une quelconque des revendications 1 à 4, qui a une chaleur de fusion cristalline, mesurée conformément à la norme JIS K7122:2012, de 10 J/g ou moins.
